# EUROPEAN PATENT APPLICATION

(11) **EP 3 719 976 A1**
(43) Date of publication of application: **07.10.2020**
(21) Application number: 19167179.1
(22) Date of filing: 03.04.2019
(51) Int. Cl.: H02K 11/01, H02K 49/10, H02K 53/00

(54) **PERMANENT MAGNET MOTOR**

(71) Applicant: Tomori, Nandor, 07701 Kralovsky Chlmec (SK)
(72) Inventor: Tomori, Nandor, 07701 Kralovsky Chlmec (SK)

(57) **Abstract**

A permanent magnet motor comprising a stator (110), a rotor (120), and a rotatable shield (130) between them. The shield (130) absorbs the magnetic field of the adjacent stator magnet poles (111). By rotating the shield (130), the rotor (120) turns due to the attraction forces of the unshielded stator pole permanent magnets, and the motor produces torque.

## Description

### TECHNICAL FIELD

The present invention relates to mechanical and electrical energy production, more particularly, to electromagnetic motors.

### BACKGROUND

Conventional electric motors require electromagnetic coils to produce changing or rotating magnetic fields which allow them to operate. These coils use electric current to produce the magnetic fields and thus they consume electrical energy.

The objective of the present invention is to provide a motor, relying solely on permanent magnets to produce the magnetic fields. These magnets have permanent magnetic fields and require no additional electric current to create them. Electrical energy is needed only for motor support functions, torque and mechanical work is produced without electrical energy consumption.

### BRIEF DESCRIPTION OF DRAWINGS

Fig. 1A, Fig. 1B and Fig. 1C is a schematic view of a radial flux permanent magnet motor in different operating positions;
Fig. 2 is a schematic view of a permanent magnet motor similar to that on Fig. 1A showing a more advanced shield design;
Fig. 3 is an exploded view of a second, axial embodiment of a permanent magnet motor;
Fig. 4 is a schematic view of a third exemplary embodiment of a permanent magnet motor;
Fig. 5 is a schematic view of a fourth exemplary embodiment of a permanent magnet motor;
Fig. 6 is a schematic view of a fifth exemplary embodiment of a permanent magnet motor;
Fig. 7 is a schematic view of a linear permanent magnet motor;

### DETAILED DESCRIPTION OF THE INVENTION

In cooperation with attached drawings, the technical contents and detailed description of the present invention are described thereinafter according to six preferable embodiments, being not used to limit its executing scope.

Reference will now be made to the drawing figures to describe the present invention in detail.

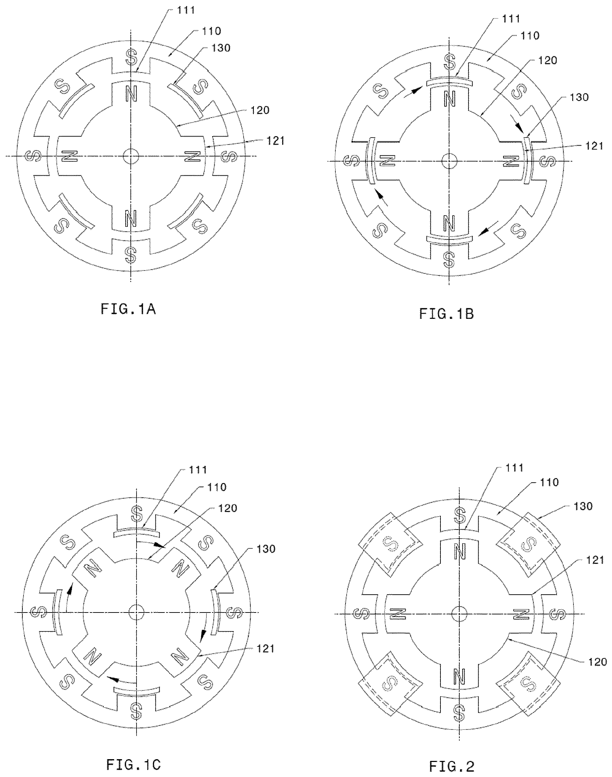

Reference is made to Fig. 1A which is a schematic view of a permanent magnet motor according to the present invention. The motor comprises a stator 110, a rotor 120 and a rotatable shield 130 between them. The stator 110 further comprises permanent magnets 111, facing the rotor with their south poles. The rotor 120 comprises permanent magnets 121 as well, facing the stator with their north poles. The rotor north poles are attracted to the stator south poles. For the sake of simplicity only the interacting magnet poles are illustrated.

Fig. 1B and Fig. 1C are schematic views which explain further the working principle of the permanent magnet motor from Fig. 1A. On Fig. 1B the shield 130 is rotated clockwise by 45° and is now between the south pole of the stator 110 and the north pole of the rotor 120. The shield 130 absorbs and redirects the electromagnetic field of the adjacent stator pole 111, thus weakening the attraction force between the stator 111 and rotor magnet 121 poles. The rotor magnet pole 121 is now more attracted to the next unshielded stator pole 111 and therefore turns to it (shown in Fig. 1C). The attraction force between the poles creates torque, and drives the rotor 120. The shield 130 is rotated again and the cycle is repeated. In case of a ferromagnetic shield, work has to be done to pull it away from the attraction force of the stator pole 111, but as it gets closer to the next pole of both the stator 110 and rotor 120, it gets pulled in, thus the shield 130 is now driven by the stator 111 and rotor pole 121 attraction forces created by their magnetic fields. This means, that possibly no net work has to be done to drive the shield 130 between the poles.

Fig. 2 shows a schematic view of a permanent magnet motor similar to the one shown on Fig. 1A, except that the shield 130 has a more advanced design. Its body is folded around the stator magnet 111, thus providing a more efficient way of absorbing the magnetic field of the stator magnets 111.

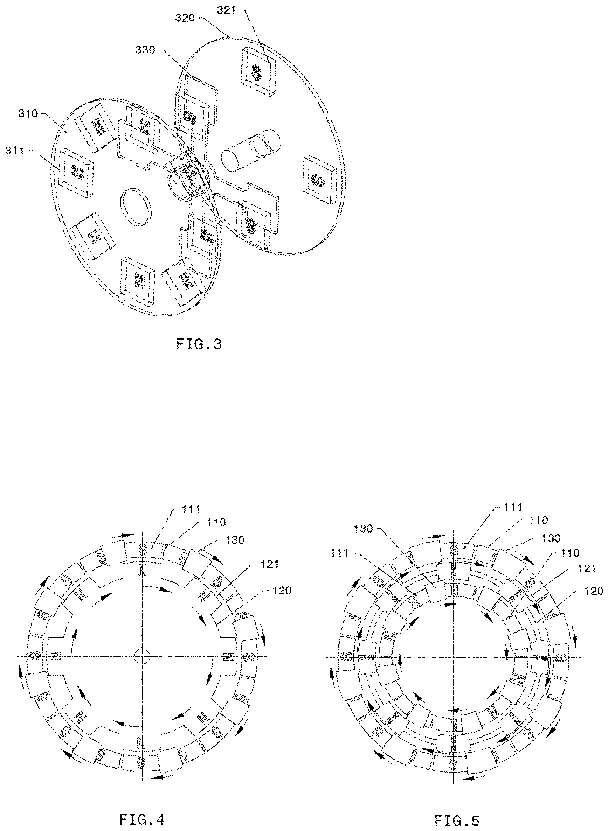

Fig. 3 shows an exploded schematic view of another possible embodiment of a permanent magnet motor. This motor comprises a stator 310, a rotor 320, a shield 330, permanent magnets 311 mounted on the stator and permanent magnets 321 mounted on the rotor 320. This motor has a similar working principle as the one described on Fig. 1A, Fig. 1B and Fig. 1C, except that the permanent magnets of the rotor 321 and stator 311 are facing each other in axial direction.

Fig. 4 shows a permanent magnet motor similar to that on Fig. 1A. The stator magnets 111 are mounted close to each other, and the more advanced shield design from Fig. 2 is shown. The stator 110 can be made of a radially magnetized ring as well, instead of separate magnets. During the operation, the shield 130 rotates and starts to absorb the stator poles magnetic field in the gap between the stator 111 and rotor pole 121. The rotor poles 121 are pulled by the adjacent unshielded stator poles 111 in the direction of the shield 130 rotation. The shield 130 can be a separate rotatable unit or it can be fixed to the rotor 120. In the latter case a predefined amount of the rotor pole 121 shielding would create a constant predefined motor torque.

Fig. 5 shows a permanent magnet motor similar to that on Fig. 4, except that it has two stator rings 110 and a second set of shields 130 as well. With such an arrangement the pulling force experienced by the rotor pole magnets 121 can be doubled and the motor torque as well. Applying coaxially more sets of stator-rotor rings would further increase the motor torque from a given motor diameter.

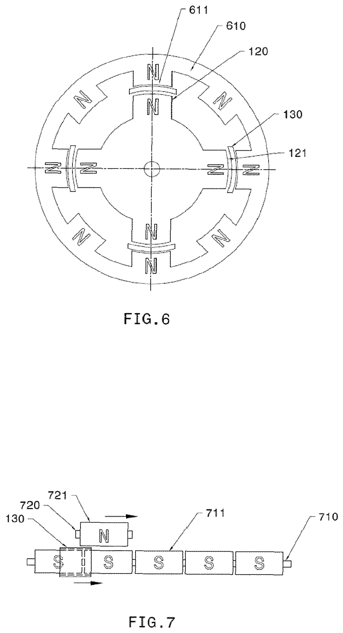

Fig. 6 shows another possible embodiment of a permanent magnet motor comprising a stator 610, a rotor 120 and a rotatable shield 130. All the stator 611 and rotor 121 permanent magnets are facing each other with their north poles (as shown). Opposite arrangement is possible as well. The shield 130 absorbs and redirects the magnetic fields of the adjacent stator magnet poles 611, therefore the rotor poles 121 face the shield 130, as they experience the least amount of repulsive force at that position. In the next step the shield 130 is rotated towards the adjacent stator pole 611, therefore the rotor poles 121 are repelled by the opposite stator poles 611, and the rotor 120 turns in the direction of the shield 130 rotation.

Fig. 7 shows a linearly arranged permanent magnet motor comprising a stator 710, a rotor 720 and a shield 130. The stator permanent magnets 711 are arranged linearly, in a row. The rotor comprises one or more linearly arranged permanent magnets 721. In this case the rotor 720 makes not a rotary, but a linear motion, along the path of the stator 710. The shield acts as explained in earlier cases, making the rotor 720 to move along the stator 710 due to the attraction or repulsive forces of the unshielded permanent magnets, depending on the polarity of the interacting poles.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A permanent magnet motor, comprising:
a stator (110), comprising permanent magnets (111);
a rotor (120), comprising permanent magnets (121);
a shield (130), located between the stator and rotor, partially or completely covering the adjacent stator magnet poles.

2. The permanent magnet motor in accordance with claim 1, wherein:
the shield (130) is free to rotate between the stator (110) and the rotor (120) about the motor axis.

3. The permanent magnet motor in accordance with claim 1, wherein:
the shield (130) is fixed to the rotor (120).

4. The permanent magnet motor of claim 2, wherein:
the stator (110) and the rotor (120) comprises several coaxially arranged rings of permanent magnets, having a shield (130) between each stator-rotor ring.

5. The permanent magnet motor of claim 3, wherein:
the stator (110) and the rotor (120) comprises several coaxially arranged rings of permanent magnets, having a shield (130) between each stator-rotor ring.

6. The permanent magnet motor in accordance with claim 1, wherein:
the stator (710) and rotor (720) permanent magnets are linearly arranged.
